# EUROPEAN PATENT SPECIFICATION

(11) **EP 0 790 004 B1**
(45) Date of publication and mention of the grant of the patent: **19.12.2001**
(21) Application number: 96904309.0
(22) Date of filing: 01.03.1996
(51) Int. Cl.: A23L 1/304, A23L 2/52

(54) **MINERAL PREPARATION CONTAINING CORAL SAND OR CORALLITE**
MINERALISCHE ZUSAMMENSETZUNG MIT KORALLENSAND ODER KORALLIT
PREPARATION MINERALE CONTENANT DU SABLE DE CORAIL OU DES INDIVIDUS CORALLIENS

(30) Priority: 04.09.1995 JP 22633295
(43) Date of publication of application: 20.08.1997
(73) Proprietor: MARINE BIO CO., LTD., Tokyo 101 (JP)
(72) Inventor: SOMEYA, Nobuo, Tokyo 171 (JP); SOMEYA, Shinichi, Tokyo 170 (JP); KITAZATO, Tadao, Tokyo 168 (JP)
(74) Representative: Lee, Nicholas John
(86) International application number: JP9600504
(87) International publication number: WO9708963

(56) References cited:
- JP-A- 1 320 969
- JP-A- 59 120 078
- JP-A- 63 148 956

## Description

### Field of the Invention

This invention relates to an edible or potable magnesium preparation and mineral preparation made from corallite or coral sand occurring in nature. More particularly, this invention relates to food additives made from these magnesium preparation and mineral preparation. Furthermore, this invention relates to health food containing these magnesium preparation and mineral preparation.

### Background of the Invention

As to magnesium, the Ministry of Health and Welfare, for example, made a report on nutrition requirement of the Japanese in 1989. This report pointed out that the desired intake of magnesium for adults was 300mg. Since this report, much attention has been paid to the importance of magnesium as a nutrient.

Magnesium was abundantly contained in natural salt as a part of minerals. Accordingly, magnesium was ingested naturally when such foods as miso and shoyu which contained natural salt were eaten. Natural salt, however, is seldom used now, and the magnesium intake tends to be insufficient.

And magnesium was contained in large quantities in green or yellow vegetables and marine organisms. However, because a large amount of chemical fertilizer was used as more and more vegetables were grown in a greenhouse, land became barren, and the amount of magnesium contained in vegetables tends to decrease.

Thus it is becoming more and more difficult to ingest a necessary amount of magnesium by taking normal meals. Consequently, food industry needs magnesium supplies which can be added to food and drink.

Most of magnesium, however, is used as an industrial material. Magnesium sulfate, for example, is used as a fireproofing agent or a fabric finish. And magnesium chloride is used in magnesia cement.

Generally, most of the magnesium compounds used as food additives are chemical synthetic materials. Accordingly, the magnesium compounds are limited in use, or do not taste good. Consequently, the magnesium compounds are hardly ever used in food.

In recent years, it has become clear that the calcium-to-magnesium intake ratio is important in maintaining our health. It is suggested that calcium and magnesium be ingested in the ratio of 2 to 1.

### Disclosure of the Invention

The inventors et al. of this patent application have long paid attention to corallite or coral sand occurring in nature, and developed a purification of potable water, a food antiseptic and so on, using the corallite or coral sand.

The coral sand or corallite generally obtained have their origin in a skeleton of marine organisms, and the main component thereof is calcium carbonate. Table 1 below shows a general ratio of components of the natural coral sand or corallite. As shown in the table, the content ratio of calcium to magnesium is 35 to 2. No coral sand or corallite having a different calcium-to-magnesium ratio have been known.

**Table 1**

| | |
|---|---|
| carbonic acid (CO₂) | 40.8% |
| calcium | 35.0% |
| magnesium | 2.0% |
| potassium | 10ppm |
| sodium | 1200ppm |
| iron | 1220ppm |
| phosphorus | 360ppm |
| iodine | 2.2ppm |
| copper | 0.8ppm |
| zinc | 2.4ppm |
| chromium | 14ppm |
| cobalt | 12ppm |
| manganese | 12ppm |
| selenium | 0.05ppm |
| molybdenum | 0.2ppm |
| ignition loss | 3.0% |
| loss on drying | 0.18% |

The inventors et al. of this patent application, however, were the first to discover a new type of natural coral sand or corallite whose content ratio of calcium to magnesium was about 2 to 1. The inventors et al. requested Tokyo Shokuhin Gijyutsu Kenkyujo to analyze the components of the natural coral sand or corallite which had been gathered in the seabed of Okinawa, which is in the subtropics, and a part of the analyzed results is shown in Table 2 (a test product "Coral Star" is the coral sand or corallite occurring in nature which were washed in water and then dried).

**Table 2**

| Name and amount of a test product (analyte) Coral Star Items to be tested calcium, magnesium, sodium, potassium, iron, manganese, copper, zinc, arsenic, heavy metals (lead) Test results | |
|---|---|
| calcium | 24.0% |
| magnesium | 12.0% |
| sodium | 300ppm |
| potassium | 33ppm |
| iron | 120ppm |
| manganese | 12ppm |
| copper | 3.6ppm |
| zinc | 1.9ppm |
| arsenic | not detected (0.5ppm as limit of detection AsO₃) |
| heavy metals (as lead) | not detected (20ppm as limit of detection Pb) |

The test made by the inventors et al. of this patent application has confirmed that the new type of coral sand or corallite gathered in a particular area contain a much larger quantity of magnesium than the coral sand or corallite generally known, and that the content ratio of calcium to magnesium thereof is about 2 to 1. That is, there are coral sand or corallite containing 5% or more of calcium, preferably about 10 to 12%. There are also coral sand or corallite whose content ratio of calcium to magnesium ranges from about 5 to 1, to about 1 to 1, preferably about 2 to 1. And it has been confirmed that the coral sand or corallite are safe because they contain little lead or arsenic, and that they are readily utilizable as food additives because they taste good or are tasteless.

The object of this invention is to provide edible or potable magnesium preparation using the natural coral sand or corallite containing a large quantity of magnesium discovered by the inventors et al. of this patent application.

Another object of this invention is to provide an edible or potable mineral preparation containing calcium and magnesium in an appropriate ratio to the human body, using the natural coral sand or corallite discovered by the inventors et al., whose content ratio of calcium to magnesium ranges from about 5 to 1, to about 1 to 1.

Still another object of this invention is to provide a food additive, health food and health drink containing the above-mentioned magnesium preparation or mineral preparation.

More specifically, according to this invention, the coral sand or corallite occurring in nature containing 5% or more of magnesium, preferably about 10 to 12% of magnesium, are used as an edible or potable magnesium preparation.

Further, according to this invention, the coral sand or corallite occurring in nature whose ratio of calcium to magnesium ranges from about 5 to 1, to about 1 to 1, preferably about 2 to 1, are used as an edible or potable mineral preparation.

Generally, the above-mentioned magnesium preparation and mineral preparation are processed and made to be granules, tablets or capsules after reducing sugar, lactose, or other kinds of sugar are added to the preparation.

Instead, the magnesium preparation or mineral preparation may be dissolved by means of lactic acid, gluconic acid, or other kinds of acid, so that the preparations may be used as health drink.

The magnesium preparation or mineral preparation may further be used as food additives to be added to miso, shoyu, udon, candies, or other kinds of food.

### Best Modes for Carrying out the Invention

### (Example 1)

The natural coral sand or corallite containing a large amount of magnesium shown in Table 2 are gathered and washed in water, and foreign substances are removed from the coral sand or corallite. Then, after being washed in water, the coral sand or corallite are sterilized and dried by being heated at a temperature of 100° C or more, for example.

The coral sand or corallite which were sterilized and dried by being heated are ground so as to be of a given grain size.

According to the above process, an edible or potable mineral preparation which contains calcium and magnesium in the ratio of about 2 to 1 can be obtained.

This powdery mineral preparation can be ingested as it is. Generally, however, reducing sugar, lactose, or other kinds of sugar are added to sweeten the preparation so that the preparation may become easier to ingest. If the sweetened mineral preparation is processed so that the preparation may be of a shape such as granules, tablets, or capsules, the preparation becomes still easier to ingest.

The powdery mineral preparation thus obtained may be dissolved by means of lactic acid, gluconic acid, or other kinds of acid so as to be alkaline health drink.

Furthermore, the powdery mineral preparation thus obtained may be used as a food additive added to general foodstuffs after the grain size of the preparation is adjusted, for example, in such a way that the preparation may be finely ground and become powdery. The food additives may be added to general food such as wafers, natto, soup, drink, candies, miso, noodles and others.

As was explained above, the natural coral sand or corallite used in this invention are safe natural materials themselves which can be used as additives to food and drink. In addition, the coral sand or corallite used in this invention were discovered by the inventors et al., and contain magnesium at the rate of as high as about 10 to 12%. The coral sand or corallite contain calcium and magnesium in the ratio of about 2 to 1. Because the coral sand or corallite contain little lead or arsenic, they are safe. Moreover, the coral sand or corallite are tasteless and readily utilizable. Finally, the coral sand or corallite are natural products which can be obtained in large quantities.

Consequently, the mineral preparation used in this invention, unlike a mineral preparation obtained from usual mineral resources, is safe to the human body because the preparation is made from ecological resources.

As was described above, the preparation contains a large amount of magnesium, and also contains calcium and magnesium in the ratio of about 2 to 1. Accordingly, if the mineral preparation in this invention is taken, enough magnesium, which tends to be taken in insufficiently, can be ingested, and calcium and magnesium can be ingested at a rate suitable to the human body. Consequently, the preparation is extremely effective to maintain the human health.

Furthermore, the mineral preparation containing a large quantity of magnesium can be produced relatively inexpensively and in large quantities because the natural coral sand or corallite are used.

### (Example 2)

In the above example, the coral sand or corallite containing a large amount of magnesium were used to produce mineral preparation. Instead, the coral sand or corallite containing a large amount of magnesium may be used to produce an edible or potable magnesium preparation.

For example, as described below, if only magnesium is separated from the coral sand or corallite, magnesium oxide, which is a magnesium preparation, can be obtained. Note that normal processes such as recleaning of the filtered residual material will not be explained below.

First, powders of the natural coral sand or corallite containing a large quantity of magnesium are dissolved by means of hydrochloric acid.

In this example, too, the coral sand or corallite were discovered in nature by the inventors et al., and as shown in Table 2, contain calcium and magnesium in the ratio of about 2 to 1.

Before being dissolved by means of hydrochloric acid, the coral sand or corallite are washed in water, if necessary, so that foreign substances may be removed. The coral sand or corallite may be ground so that the grain size thereof may be adjusted.

Then the solution thus obtained is filtered to obtain filtrate from which an insoluble residue is removed. Next, a neutralizer such as sodium hydroxide is added to the filtrate so that the filtrate may be neutralized. The neutralized filtrate is filtered once more, and a liquid containing a large quantity of magnesium hydroxide can be obtained.

This solution is dried, and powders of magnesium hydroxide can be obtained. The magnesium hydroxide powders are heat-treated, and magnesium oxide powders to be added to food can be obtained.

The natural coral sand or corallite are safe natural materials themselves which can be used as additives to food and drink. And the coral sand or corallite used in this invention were discovered by the inventors et al., and contain magnesium at the rate of as high as about 10 to 12%. In addition, the coral sand or corallite are natural products which can be obtained in large quantities.

Accordingly, the magnesium oxide powders of this invention are harmless to the human body and can be produced relatively inexpensively.

In the above description, hydrochloric acid is used to purify and separate the coral sand or corallite. Instead, other kinds of acid such as sulfuric acid which dissolve the coral sand or corallite may be used to produce magnesium compounds such as magnesium sulfate, magnesium chloride, magnesium nitrate, magnesium carbonate, magnesium phosphate, and the like.

In addition to magnesium inorganic acid salt, organic acid, for example, may be used to dissolve the coral sand or corallite, so that magnesium organic acid salt, such as magnesium acetate, magnesium citrate, magnesium lactate, magnesium gluconate and the like, may be produced.

### Industrial Applicability

As was explained above, the magnesium preparation of this invention is produced from the natural coral sand or corallite containing a large quantity of magnesium discovered by the inventors et al. of this patent application. Because the coral sand or corallite contain an extremely small amount of lead or arsenic, they are safe, and also are tasteless and readily utilizable. The magnesium preparation safe to the human body can be easily produced. Also the magnesium preparation can be produced in relatively large quantities.

The mineral preparation of this invention is made from the coral sand or corallite containing calcium and magnesium in the ratio ranging from about 5 to 1, to about 1 to 1. Because the coral sand or corallite contain an extremely small amount of lead or arsenic, they are safe, and also are tasteless and readily utilizable. Accordingly, the mineral preparation which is safe to the human body and which contains calcium and magnesium in a suitable intake ratio to the human body can be produced with ease and in relatively large quantities.

Thus, this invention has made it possible for the first time to provide the magnesium preparation and mineral preparation which are made from natural materials and which are safe and suitable to maintain the human health.

## Claims

1. An edible or potable magnesium preparation which is made from coral sand or corallite occurring in nature which contain about 5% or more of magnesium.

2. The edible and potable magnesium preparation according to claim 1, wherein said coral sand or corallite contain about 10 to 12% of magnesium.

3. A food additive containing the magnesium preparation according to claim 2.

4. Health food containing the magnesium preparation according to claim 2.

5. Health drink containing the magnesium preparation according to claim 2 which is dissolved by means of lactic acid, gluconic acid, or other kinds of acid.

6. A mineral preparation which is made from coral sand or corallite occurring in nature which contain calcium and magnesium in the ratio ranging from about 1 to 1, to about 5 to 1.

7. The mineral preparation according to claim 6, wherein said coral sand or corallite contain calcium and magnesium in the ratio of about 2 to 1.

8. A food additive containing the mineral preparation according to claim 7.

9. Health food containing the mineral preparation according to claim 7.

10. Health drink containing the mineral preparation according to claim 7 which is dissolved by means of lactic acid, gluconic acid, or other kinds of acid.

## Patentansprüche

1. Essbares oder trinkbares Magnesiumpräparat, hergestellt aus in der Natur vorkommendem Korallensand oder Korallit, der etwa 5% oder mehr Magnesium enthält.

2. Essbares und trinkbares Magnesiumpräparat nach Anspruch 1, wobei der Korallensand oder Korallit etwa 10 bis 12% Magnesium enthält.

3. Nahrungszusatz, der das Magnesiumpräparat nach Anspruch 2 enthält.

4. Gesundheitsnahrung, die das Magnesiumpräparat nach Anspruch 2 enthält.

5. Gesundheitsgetränk, das das Magnesiumpräparat nach Anspruch 2 enthält, welches mithilfe von Milchsäure, Gluconsäure oder einer anderen Säure gelöst ist.

6. Mineralpräparat, hergestellt aus in der Natur vorkommendem Korallensand oder Korallit, der Calcium und Magnesium im Verhältnis von etwa 1:1 bis 5:1 enthält.

7. Mineralpräparat nach Anspruch 6, das Korallensand oder Korallit enthält, der Calcium und Magnesium im Verhältnis von etwa 2:1 enthält.

8. Nahrungszusatz, enthaltend das Mineralpräparat nach Anspruch 7.

9. Gesundheitsnahrung, enthaltend das Mineralpräparat nach Anspruch 7.

10. Gesundheitsgetränk, enhaltend das Mineralpräparat nach Anspruch 7, welches mithilfe von Milchsäure, Gluconsäure oder einer anderen Säure gelöst ist.

## Revendications

1. Préparation potable ou comestible au magnésium, préparée à partir de corallite naturelle ou de sable de corail naturel qui contient au moins à peu près 5 % de magnésium.

2. Préparation potable ou comestible au magnésium, conforme à la revendication 1, dans laquelle la corallite ou le sable de corail contient à peu près de 10 à 12 % de magnésium.

3. Additif alimentaire contenant une préparation au magnésium conforme à la revendication 2.

4. Aliment diététique contenant une préparation au magnésium conforme à la revendication 2.

5. Boisson diététique contenant une préparation au magnésium conforme à la revendication 2, dissoute à l'aide d'acide lactique, d'acide gluconique ou d'autres acides.

6. Préparation d'éléments minéraux, préparée à partir de corallite naturelle ou de sable de corail naturel qui contient du calcium et du magnésium en un rapport valant d'environ 1/1 à environ 5/1.

7. Préparation d'éléments minéraux, conforme à la revendication 6, dans laquelle la corallite ou le sable de corail contient du calcium et du magnésium en un rapport valant à peu près 2/1.

8. Additif alimentaire contenant une préparation d'éléments minéraux conforme à la revendication 7.

9. Aliment diététique contenant une préparation d'éléments minéraux conforme à la revendication 7.

10. Boisson diététique contenant une préparation d'éléments minéraux conforme à la revendication 7, dissoute à l'aide d'acide lactique, d'acide gluconique ou d'autres acides.
